# EUROPEAN PATENT APPLICATION

(11) **EP 4 421 918 A1**
(43) Date of publication of application: **28.08.2024**
(21) Application number: 24156501.9
(22) Date of filing: 08.02.2024
(51) Int. Cl.: H01M 4/58, H01M 10/0525, H01M 10/0567, H01M 10/058, H01M 4/02, H01M 4/36, H01M 4/505, H01M 4/525, H01M 4/587

(54) **LITHIUM-ION SECONDARY BATTERY WITH ELECTROLYTE ADDITIVE**

(30) Priority: 21.02.2023 US 202318171799
(71) Applicant: Saft America, Cockeysville, MD 21030-2152 (US)
(72) Inventor: CHEN, Xilin, COCKEYSVILLE, 21030-2152 (US); CAO, Frank, COCKEYSVILLE, 21030-2152 (US); YANG, Lianxi, COCKEYSVILLE, 21030-2152 (US); NEGRETE, Carlos, COCKEYSVILLE, 21030-2152 (US); GRESZLER, Thomas, COCKEYSVILLE, 21030-2152 (US)
(74) Representative: Hirsch & Associés

(57) **Abstract**

Provided is a lithium-ion secondary batteries including lithium vanadium fluorophosphate (e.g., LiVPO₄F and its derivatives) and/or a mix containing LVPF as a positive electrode active material and an electrolytic solution including tris(trimethylsilyl) phosphate (TTSP) to reduce cycle capacity loss.

## Description

### BACKGROUND

### Technical Field

The present disclosure relates to lithium-ion secondary batteries including lithium vanadium fluorophosphate (e.g., LiVPO₄F and its derivatives) (referred to generally herein as LVPF) as a positive electrode active material and an electrolytic solution including tris(trimethylsilyl) phosphate (TTSP).

### Description of Related Art

LVPF is a very promising positive electrode (i.e., cathode) active material that has a relatively high energy density (compared to many conventionally used cathode materials) from its charge and discharge plateau of about 4.2 V vs. Li⁺/Li (the V⁴⁺/V³⁺ redox pair), which, respectively, correspond to the intercalation and deintercalation of lithium ions (Li⁺).

U.S. Application No. 17/084,374, which published as US 2022/0140316 (hereinafter "Patent Document 1"), discloses blended cathode materials including (i) a first active material which is LVPF, with (ii) a second active material which is one or more of NCA, NMC, LFP, LMP, LFMP, LCP, LCO, LNO, LMO, and LNMO (which are described in detail below). Patent Document 1 discloses that the blend may provide one or more benefits, such as improved determination of state of charge (SOC), energy density, cycle life, coating quality, adhesion, safety, and electrode density. Patent Document 1 is incorporated herein by reference in its entirety.

U.S. Application No. 17/319,654, which published as US 2022/0367842 (hereinafter "Patent Document 2") relates to a method of pre-lithiation using LVPF and a pre-lithiated lithium-ion secondary battery obtained by the method. The pre-lithiation methods include compensating for an expected loss of active lithium by selecting LVPF having a specific pre-lithiated chemistry (or a blend of LVPF selected to have a specific pre-lithiated chemistry) and selecting a total amount of the pre-lithiated LVPF. The pre-lithiation methods may include initially charging the lithium-ion secondary battery at the lower of the two charge / discharge plateaus of LVPF to store extra lithium to compensate lithium loss occurring in cycling. Patent Document 2 is incorporated herein by reference in its entirety.

Similar to other phosphate cathode materials (e.g., LMFP, LFP), LVPF suffers from an initial capacity loss in cells. Without being bound by any theory, one reason for the capacity loss when using LVPF as a cathode active material is that vanadium (V) dissolves or otherwise dissociates into the electrolyte, is reduced at the anode, and forms a film/metal on the anode, which may cause problems with the solid electrolyte interphase (SEI).

Accordingly, there is still a need for a cathode active material including LVPF with reduced capacity loss.

### SUMMARY OF THE DISCLOSURE

Aspects of certain embodiments of the present disclosure overcome the above disadvantages and/or other disadvantages not described above. However, aspects of the embodiments are not required to overcome the disadvantages described above, and aspects of the embodiments may not overcome any of the disadvantages described above.

It was found that tris(trimethylsilyl) phosphate (TTSP) can be used as an electrolyte additive to significantly suppress initial capacity loss when using LVPF as a cathode active material, and thus also improve the cycling stability in cells.

According to one aspect, the present disclosure provides a lithium-ion secondary battery including LVPF as a positive electrode active material and an electrolytic solution including tris(trimethylsilyl) phosphate (TTSP).

In one aspect, the lithium-ion secondary battery includes:
a cathode;
an anode; and
an electrolytic solution, wherein
the cathode includes a cathode active material including a LVPF represented by the following Formula (1):

   Li₁₊ₓV_{1-y}M_{y}PO₄F_{z} Formula (1),
wherein, in Formula (1), 0≤x≤1; 0≤y≤0.5; 0.8≤z≤1.2; and M is one or more selected from Ti, Al, Mg, Mn, Fe, Co, Y, Cr, Cu, Ni, or Zr,
the electrolytic solution including an additive including TTSP, and
a content of the TTSP in the electrolytic solution is from greater than 0 wt% to about 10 wt% when a total weight of the electrolyte solution is considered to be 100 wt%.

In one aspect, the LVPF represented by the Formula (1) may be Li₁₊ₓVPO₄F_{z}.

In one aspect, the LVPF represented by the Formula (1) may be LiVPO₄F.

In one aspect, the cathode active material may further include another cathode active material in a mixture with the LVPF. By "another," this means an active material falling outside of the scope of Formula (1).

In one aspect, a weight ratio of the LVPF to the another cathode active material may be r : (1-r), wherein 0<r<1.

In one aspect, the another cathode active material may be a phosphate active material and/or a non-phosphate active material.

In one aspect, the phosphate cathode active material may be represented by Formula (A):

Li₁₊ₓM1ₐX_{b}PO₄ Formula (A),

wherein, in Formula (A), M1 may be selected from Fe, Mn, or Co; X may be at least one transition metal selected from Ni, V, Y, Mg, Ca, Ba, Al, Sc, or Nd; 0≤x≤0.15; a>0; b≥0; and optionally a+b=1.

In one aspect, the phosphate cathode active material may be represented by one of the following Formula (A1) to (A4) or a blend thereof:

Li₁₊ₓFePO₄ Formula (A1),

wherein, in Formula (A1), 0≤x≤0.15,

Li₁₊ₓMnPO₄ Formula (A2),

wherein, in Formula (A2), 0≤x≤0.15,

Li₁₊ₓCoPO₄ Formula (A3),

wherein, in Formula (A3), 0≤x≤0.15,

Li₁₊ₓFe_{y}Mn_{z}X_{b}PO₄ Formula (A4),

wherein, in Formula (A4), X is at least one transition metal selected from Ni, V, Y, Mg, Ca, Ba, Al, Sc, or Nd; 0≤x≤0.15; y>0; z>0; b≥0; and optionally y+z+b=1.

In another aspect, the phosphate cathode active material may be represented by Formula (A5):

Li₃₊ₓV_{2-y}M_{y}(PO₄)₃ Formula (A5).

wherein, in Formula (A5), 0≤x≤1; 0≤y≤0.5; 0.8≤z≤1.2; and M is one or more selected from Ti, Al, Mg, Mn, Fe, Co, Y, Cr, Cu, Ni, or Zr.

In one aspect, the another cathode active material may include a blend one or more of the phosphate cathode active materials according to Formulas (A1) to (A5).

In one aspect, with regard to the weight ratio (r : (1-r)) of the LVPF to the phosphate cathode active material, r may be 0.1≤r≤0.9.

In one aspect, with regard to the weight ratio (r : (1-r)) of the LVPF to the phosphate cathode active material, r may be 0.5<r≤0.9.

In one aspect, a weight ratio of the LVPF to the non-phosphate cathode active material may be s : (1-s), wherein 0<s<1.

In one aspect, the non-phosphate cathode active material may be represented by Formula (B), (C), (D), or a blend thereof:

Li₁₊ₓNiₐM2_{d}M3ₑO₂ Formula (B),

wherein, in Formula (B), M2 is at least one selected from Co, Al, or Mn; M3 is one or more selected from B, Mg, Si, Ca, Ti, V, Cr, Mn, Fe, Cu, Zn, Y, Zr, Nb, W, Mo, Sr, Ce, Ga, or Ta; 0≤x≤0.15; a>0; d>0; e≥0; and optionally a+d+e=1,

Li₁₊ₓMn₂O₄ Formula (C),

wherein, in Formula (C), 0≤x≤0.15,

Li₁₊ₓCoO₂ Formula (D),

wherein, in Formula (D), 0≤x≤0.15.

In one aspect, with regard to the weight ratio (s : (1-s)) of the LVPF to the non-phosphate active material, s may be 0.1≤s≤0.9. In one aspect, with regard to the weight ratio (s : (1-s)) of the LVPF to the non-phosphate active material, s may be 0.5≤s≤0.9.

In one aspect, the non-phosphate cathode active material may be represented by one of the following Formula (B1) to (B4) or a blend thereof:

Li_{w}(NiₓMn_{y}Co_{z}Mₜ)O₂ Formula (B1),

wherein, in Formula (B1), 0.9≤w≤1.1; x>0; y>0; z>0; t≥0; M is one or more selected from Al, B, Mg, Si, Ca, Ti, V, Cr, Fe, Cu, Zn, Y, Zr, Nb, W, Mo, Sr, Ce, Ga, and Ta; and optionally x+y+z+t=1,

Li₁₊ₓNiₐMn_{b}O₂ Formula (B2),

wherein, in Formula (B2), 0≤x≤0.15; a>0; b>0; and optionally a+b=1,

Li_{w}(NiₓCo_{y}Al_{z}Mₜ)O₂ Formula (B3),

wherein, in Formula (B3), 0.9≤w≤1.1; x>0; y>0; z>0; t≥0; M is one or more selected from the group consisting of B, Mg, Si, Ca, Ti, V, Cr, Mn, Fe, Cu, Zn, Y, Zr, Nb, W, Mo, Sr, Ce, Ga, and Ta; and optionally x+y+z+t=1,

Li₁₊ₓNiₐMn_{b}Co_{c}Al_{d}O₂ Formula (B4),

wherein, in Formula (B4), 0≤x≤0.15; a>0; b>0; c>0; d>0; and optionally a+b+c+d=1.

In one aspect, the non-phosphate cathode active material may be represented by one of LiNi_{0.33}Mn_{0.33}Co_{0.33}O₂ (NMC 111), LiNi_{0.5}Mn_{0.3}Co_{0.2}O₂ (NMC 532), LiNi_{0.6}Mn_{0.2}Co_{0.2}O₂ (NMC 622), or LiNi_{0.8}Mn_{0.1}Co_{0.1}O₂ (NMC 811).

In one aspect, the cathode active material may include a blend of the LVPF with both the phosphate cathode active material and the non-phosphate cathode active material.

In one aspect, a weight ratio of the phosphate cathode active material to the non-phosphate cathode active material is t : (1-t), wherein 0.1≤t≤0.9.

In one aspect, the electrolytic solution includes a supporting salt (e.g., a lithium salt) and an organic solvent.

In one aspect, the additive of the electrolytic solution may further include fluorinated ethylene carbonate (FEC) and/or vinylene carbonate (VC) in a total amount of 1 wt% to 15 wt% when a total weight of the electrolyte solution is considered to be 100 wt%, and a total amount of the TTSP, the FEC, and the VC is 2 wt% to 20 wt%.

In one aspect, the cathode may further include one or more conductive materials and a binder material.

In one aspect, the anode may include an anode active material including graphite and/or silicon.

In one aspect, the present disclosure provides a method of making a lithium-ion secondary battery with reduced cycle capacity loss.

In one aspect, the method may include selecting a phosphate-based cathode active material including at least lithium vanadium fluorophosphate (LVPF) represented by the Formula (1); and adding an effective amount of TTSP to the electrolytic solution to reduce cycle capacity loss.

In one aspect, the method may include selecting an additional cathode active material to be blended with the LVPF, such as for any of the reasons explained in Patent Document 1.

Additional features and advantages of the present disclosure are described further below. This summary section is meant merely to illustrate certain features of the disclosure, and is not meant to limit the scope of the disclosure in any way. The failure to discuss a specific feature or embodiment of the disclosure, or the inclusion of one or more features in this summary section, should not be construed to limit the claims.

### BRIEF DESCRIPTION OF THE FIGURES

The application file contains at least one drawing executed in color. Copies of this patent application publication with color drawing(s) will be provided by the Office upon request and payment of the necessary fee.

Any figures contained herein are provided only by way of example and not by way of limitation.
FIG. **1** is a chart showing capacity retention (%) vs cycle number for the pouch cells prepared in Example 1.
FIG. **2** is a chart showing rate capability (capacity retention (%) vs C rate) for the coin cells prepared in Example 2.
FIG. **3** is a chart showing charge capability (taper current vs taper charging time) for the coin cells prepared in Example 3.
FIG. **4** is a chart showing initial discharge capability vs cycle number for the pouch cells of Example 4.

### DETAILED DESCRIPTION OF THE EMBODIMENTS OF THE DISCLOSURE

It is to be understood that both the foregoing general description and the following detailed description are exemplary and are intended to provide further explanation of the claims. Accordingly, various changes, modifications, and equivalents of the methods, apparatuses, and/or systems described herein will be apparent to those of ordinary skill in the art. Moreover, descriptions of well-known functions and constructions may be omitted for increased clarity and conciseness.

The terms used in the description are intended to describe embodiments only, and shall by no means be restrictive. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

Any range will be understood to encompass and be a full disclosure of each discrete point and subrange within the range.

Unless defined otherwise, all technical and scientific terms used herein have the same meaning as commonly understood by one of ordinary skill in the art to which this disclosure belongs. Any methods and materials similar or equivalent to those described herein may be used in the practice or testing of the disclosure, as it will be understood that modifications and variations are encompassed within the spirit and scope of the instant disclosure.

As used herein, "about," "approximately," "substantially," and "significantly" will be understood by a person of ordinary skill in the art and will vary in some extent depending on the context in which they are used. If there are uses of the term which are not clear to persons of ordinary skill in the art given the context in which it is used, "about" and "approximately" will mean plus or minus ≤10% of particular term, and "substantially" and "significantly" will mean plus or minus >10% of the particular term. "Comprising" and "consisting essentially of" have their customary meaning in the art.

### Lithium Vanadium Fluorophosphate (LVPF)

The cathode comprises a cathode active material including a LVPF represented by the following Formula (1):

Li₁₊ₓV_{1-y}M_{y}PO₄F_{z} Formula (1),

wherein, in Formula (1), 0≤x≤1; 0≤y≤0.5; 0.8≤z≤1.2; and M is one or more selected from Ti, Al, Mg, Mn, Fe, Co, Y, Cr, Cu, Ni, and Zr.

The LVPF may be LiVPO₄F.

The subscript x in Formula (1) may be 0.05<x≤1.

The LVPF may be represented by the following Formula (1A) and or the following Formula (1B):

Li₁₊ₓVPO₄F Formula (1A),

wherein, in Formula (1A), 0≤x≤0.15,

   Li₁₊ₓV_{1-y}M_{y}PO₄F_{z} Formula (1B),
wherein, in Formula (1B), 0≤x≤0.15, 0<y≤0.5, 0.8≤z≤1.2, and M is selected from Ti, Al, Cu, Mg, Mn, Fe, Co, Y, Cr, Ni, or Zr.

When the LVPF includes a blend of Formula (1A) with Formula (1B), the weight ratio of Formula (1A) to Formula (1B) can be w : (1-w), wherein 0<w<1. In some aspects, the value for w can be, for example, 0.1≤w≤0.9, 0.2≤w≤0.8, 0.3≤w≤0.7, or 0.4≤w≤0.6.

Among the LVPF derivatives according to Formula (1B), the following examples are noted: LiY_{y}V_{1-y}PO₄F (0<y≤0.5), LiCr_{y}V_{1-y}PO₄F (0<y≤0.5), LiCo_{y}V_{1-y}PO₄F (0<y≤0.5), LiMn_{y}V_{1-y}PO₄F (0<y≤0.5), LiTi_{y}V_{1-y}PO₄F (0<y≤0.5), LiFe_{y}V_{1-y}PO₄F (0<y≤0.5).

### Phosphate Cathode Active Material

The cathode active material may include a phosphate cathode active material as another cathode active material in a blend with the LVPF.

### Formula (A) (e.g., LFP, LMP, LCP, LFMP)

The phosphate cathode active material may be represented by the following Formula (A):

Li₁₊ₓM1ₐX_{b}PO₄ Formula (A),

wherein, in Formula (A), M1 is at least one selected from Fe, Mn or Co; X is at least one transition metal selected from Ni, V, Y, Mg, Ca, Ba, Al, Sc, or Nd; 0≤x≤0.15; a>0; b≥0; and optionally a+b=1.

More specifically, the phosphate cathode active material according to the Formula (A) can be one of the following Formula (A1) (i.e., LFP), Formula (A2) (i.e., LMP), Formula (A3) (i.e., LCP), Formula (A4) (i.e., LFMP), or a blend thereof:

Li₁₊ₓFePO₄ Formula (A1),

wherein, in Formula (A1), 0≤x≤0.15;

   Li₁₊ₓMnPO₄ Formula (A2),
wherein, in Formula (A2), 0≤x≤0.15;

   Li₁₊ₓCoPO₄ Formula (A3),
wherein, in Formula (A3), 0≤x≤0.15;

   Li₁₊ₓFe_{y}Mn_{z}X_{b}PO₄ Formula (A4),
wherein, in Formula (A4), X is at least one transition metal selected from Ni, V, Y, Mg, Ca, Ba, Al, Sc, or Nd; 0≤x≤0.15; y>0; z>0; b≥0; and optionally y+z+b=1;

   Li₁₊ₓFe_{y}Mn_{z}X_{b}PO₄ Formula (A4),
wherein, in Formula (A4), X is at least one transition metal selected from the group consisting of Ni, V, Y, Mg, Ca, Ba, Al, Sc, and Nd; 0≤x≤0.15; y>0; z>0; b≥0; and optionally y+z+b=1.

Herein, the term "LFP" means Formula (A1), the term "LMP" means Formula (A2), the term "LCP" means Formula (A3), and the terms "LFMP" mean Formula (A4).

The phosphate cathode active material may also be represented by the following Formula (A5):

Li₃₊ₓV_{2-y}M_{y}(PO₄)₃ Formula (A5),

wherein, in Formula (A5), 0≤x≤1; 0≤y≤0.5; 0.8≤z≤1.2; and M is one or more selected from Ti, Al, Mg, Mn, Fe, Co, Y, Cr, Cu, Ni, or Zr.

### Example Blends and Amounts

When the phosphate cathode active material is included in a blend with the LVPF, a weight ratio of the LVPF to the phosphate cathode active material is r : (1-r), wherein 0<r<1. In other words, the r corresponds to the weight percent of the LVPF when a total of the LVPF and phosphate cathode active material is considered to be 100%. For example, when r is 0.9, this corresponds to 90 wt.% LVPF and 10 wt.% of the phosphate cathode active material.

In the weight ratio r:(1-r), r can be any value greater than 0 and less than 1, and r is not required to be an integer (e.g., r can be 0.75 to 0.85). In some aspects, the value for r can be, for example, 0.1≤r≤0.9, 0.2≤r≤0.9, 0.3≤r≤0.9, 0.4≤r≤0.9, 0.5≤r≤0.9, 0.6≤r≤0.9, 0.7≤r≤0.9, 0.8≤r≤0.9, etc.

In one example, the LVPF may be blended with Formula (A4) (LFMP) as the phosphate cathode active material in the weight ratio r:(1-r). As disclosed in Patent Document 1, this blend can be used to generate a sloped discharge curve to facilitate determining a state of charge (SOC). For example, as explained in Patent Document 1, the second plateau (~3.5V) of the LFMP can serve as an excellent SOC indicator in discharge. In this example, r is not particularly limited, but in some aspects may be 0.4≤r≤0.6

### Non-Phosphate Cathode Active Material

The cathode active material may include a non-phosphate cathode active material as another cathode active material in a blend with the LVPF.

The non-phosphate cathode active material may be represented by the following Formula (B), (C), and/or (D).

### Formula (B) (e.g., NMC, LNMO, NCA, and NMCA)

The non-phosphate cathode active material can be represented by the following Formula (B):

Li₁₊ₓNiₐM2_{d}M3ₑO₂ Formula (B),

wherein, in Formula (B), M2 is at least one selected from Co, Al or Mn; M3 is at least one of B, Mg, Si, Ca, Ti, V, Cr, Mn, Fe, Cu, Zn, Y, Zr, Nb, W, Mo, Sr, Ce, Ga, Ta, or mixtures thereof; 0≤x≤0.15; a>0; d>0; e≥0; and optionally a+d+e=1.

More specifically, the non-phosphate cathode active material according to the Formula (B) can be one or more of the following Formula (B1) to (B4):

Li_{w}(NiₓMn_{y}Co_{z}Mₜ)O₂ Formula (B1),

wherein, in Formula (B1), 0.9≤w≤1.1; x>0; y>0; z>0; t≥0; M is at least one of Al, B, Mg, Si, Ca, Ti, V, Cr, Fe, Cu, Zn, Y, Zr, Nb, W, Mo, Sr, Ce, Ga, Ta, or mixtures thereof; and optionally x+y+z+t=1;

   Li₁₊ₓNiₐMn_{b}O₂ Formula (B2),
wherein, in Formula (B2), 0≤x≤0.15; a>0; b>0; and optionally a+b=1;

   Li_{w}(NiₓCo_{y}Al_{z}Mₜ)O₂ Formula (B3),
wherein, in Formula (B3), 0.9≤w≤1.1; x>0; y>0; z>0; t≥0; M is at least one of B, Mg, Si, Ca, Ti, V, Cr, Mn, Fe, Cu, Zn, Y, Zr, Nb, W, Mo, Sr, Ce, Ga, Ta, or mixtures thereof; and optionally x+y+z+t=1;

   Li₁₊ₓNiₐMn_{b}Co_{c}Al_{d}O₂ Formula (B4),
wherein, in Formula (B4), 0≤x≤0.15; a>0; b>0; c>0; d>0; and optionally a+b+c+d=1.

Specific examples of Formula (B) include, for example, NMC (see Formula (B1)), LNMO (see Formula (B2)), NCA (see Formula (B3)), and NMCA (see Formula (B4)).

The term "NMC" means Formula (B1), the term "LNMO" means Formula (B2), the term "NCA" means Formula (B3), and the term "NMCA" mean Formula (B4).

Specific examples of Formula (B1) include, for example, LiNi_{0.33}Mn_{0.33}Co_{0.33}O₂ (NMC 111), LiNi_{0.5}Mn_{0.3}Co_{0.2}O₂ (NMC 532), LiNi_{0.6}Mn_{0.2}Co_{0.2}O₂ (NMC 622), or LiNi_{0.8}Mn_{0.1}Co_{0.1}O₂ (NMC 811).

### Formula (C) (LMO)

The non-phosphate cathode active material can be represented by the following Formula (C):

Li₁₊ₓMn₂O₄ Formula (C),

wherein, in Formula (C), 0≤x≤0.15.

The term "LMO" means Formula (C).

### Formula (D) (LCO)

The non-phosphate cathode active material can be represented by the following Formula (D):

Li₁₊ₓCoO₂ Formula (D),

wherein, in Formula (D), 0≤x≤0.15.

The term "LCO" means Formula (D).

### Example Blends and Amounts

When the non-phosphate cathode active material is included in a blend with the LVPF, a weight ratio of the LVPF to the non-phosphate cathode active material is s : (1-s), wherein 0<s<1. In other words, the r corresponds to the weight percent of the LVPF when a total of the LVPF and non-phosphate cathode active material is considered to be 100%. For example, when s is 0.9, this corresponds to 90 wt.% LVPF and 10 wt.% of the non-phosphate cathode active material.

In the weight ratio s:(1-s), s can be any value greater than 0 and less than 1, and s is not required to be an integer (e.g., s can be 0.75 to 0.85). In some aspects, the value for s can be, for example, 0.1≤s≤0.9, 0.2≤s≤0.9, 0.3≤s≤0.9, 0.4≤s≤0.9, 0.5≤s≤0.9, 0.6≤s≤0.9, 0.7≤s≤0.9, 0.8≤s≤0.9, etc.

In one example, the LVPF may be blended with Formula (B1) (NMC (e.g., NMC111, NMC532, NMC622, NMC811, etc.)) as the non-phosphate cathode active material in the weight ratio s:(1-s). In this example, s is not particularly limited, but in some aspects may be 0.4≤s≤0.6

In another example, the LVPF is blended with Formula (B3) (NCA) as the non-phosphate cathode active material in the weight ratio s:(1-s). In this example, s is not particularly limited, but in some aspects may be 0.4≤s≤0.6.

As noted above, the cathode active material may include a blend of each of the LVPF, the phosphate cathode active material, and the non-phosphate cathode active material.

In some aspects, a weight ratio of the phosphate cathode active material to the non-phosphate cathode active material is t : (1-t), wherein 0.1≤t≤0.9.

In some aspects, the blend of each of the LVPF, the phosphate cathode active material ("PCAM"), and the non-phosphate cathode active material ("N-PCAM") can be represented as (LVPFₐ(PCAM_{b}N-PCAM_{1-b})₁₋ₐ, wherein 0<a<1, and 0<b<1.

In one example, the LVPF can be blended with Formula (A4) (LFMP) as the phosphate cathode active material and Formula (B1) (NMC) as the non-phosphate cathode active material, wherein a weight ratio is LVPFₐ(LMFP_{b}NMC_{1-b})₁₋ₐ. Here, the value a can be 0.1≤a≤0.9, 0.2≤a≤0.8, 0.3≤a≤0.7, or 0.4≤a≤0.6, and the value b can be 0.1≤b≤0.9, 0.2≤b≤0.8, 0.3≤b≤0.7, or 0.4≤b≤0.6.

In one example, the LVPF can be blended with Formula (A4) (LFMP) as the phosphate cathode active material and Formula (B3) (NCA) as the non-phosphate cathode active material, wherein a weight ratio is LVPFₐ(LMFP_{b}NCA_{1-b})₁₋ₐ. Here, the value a can be 0.1≤a≤0.9, 0.2≤a≤0.8, 0.3≤a≤0.7, or 0.4≤a≤0.6, and the value b can be 0.1≤b≤0.9, 0.2≤b≤0.8, 0.3≤b≤0.7, or 0.4≤b≤0.6.

### Tris(trimethylsilyl)phosphate (TTSP)

The tris(trimethylsilyl)phosphate (TTSP) ([CH₃)₃SiO]₃P(O)) is added to the electrolytic solution to suppress initial capacity loss and vanadium dissolution, and thus improve cycling stability in cells. This effect is shown in the Examples below.

The TTSP can be added in an amount to suppress the initial capacity loss due to the LVPF (and due to any optionally added second active material (phosphate)).

In some aspects, a content of the TTSP in the electrolytic solution is 1 wt% to 10 wt%, when a total weight of the electrolyte solution is considered to be 100 wt%. The content may be, for example, 1-9 wt%, 1-8 wt%, 1-7 wt%, 1-6 wt%, 1-5 wt%, 1-4 wt%, 1-3 wt% or 1-2 wt%, or may be, for example, 2-10 wt%, 3-10 wt%, 4-10 wt%, 5-10 wt%, 6-10 wt%, 7-10 wt%, 8-10 wt%, or 9-10 wt%.

### Secondary Battery

The present disclosure provides a secondary battery (e.g., lithium-ion secondary battery) including a cathode having the cathode active material of the present disclosure, an anode, and an electrolytic solution having the TTSP additive. A separator can be disposed between the anode and the cathode.

The individual electrochemical cells of the present disclosure can be of any known type, such as cylindrical cell, button cell, prismatic cell, and pouch cell.

### Cathode

The structure of the cathode is not particularly limited, except that the cathode includes at least a cathode material layer (including the LVPF according to Formula (1) as the cathode active material) on a current collector.

The cathode material layer can also include, in addition to the cathode active material, one or more binder materials and/or one or more conductive materials.

The current collector of the cathode is not particularly limited and known materials and designs can be used. In a preferred embodiment, the current collector is a two-dimensional conducting support, such as a solid or perforated sheet, based on carbon or metal, for example, aluminum, nickel, titanium, steel, stainless steel, or carbon coated aluminum.

The binder material is not particularly limited and known materials for this function can be used. For example, the binder material may contain one or more of the following components: polyvinylidene fluoride (PVdF) and its copolymers, polytetrafluoroethylene (PTFE), polyacrylonitrile (PAN), polymethyl or polybutyl methacrylate, polyvinyl chloride (PVC), polyvinylformal, polyesters and amide block polyethers, polymers of acrylic acid, methylacrylic acid, acrylamide, itaconic acid, sulfonic acid, and their derivatives with lithium salt elastomers and cellulose compounds,

Among the elastomers which may be used, mention may be made of ethylene/propylene/diene terpolymers (EPDM), styrene/butadiene copolymers (SBR), acrylonitrile/butadiene copolymers (NBR), styrene/butadiene/styrene block copolymers (SBS) or styrene/acrylonitrile/styrene block copolymers (SIS), styrene/ethylene/butylene/styrene copolymers (SEBS), styrene/butadiene/vinylpyridine terpolymers (SBVR), polyurethanes (PU), neoprenes, polyisobutylenes (PIB), butyl rubbers and mixtures thereof.

The cellulose compound may be, for example, a carboxymethylcellulose (CMC), a hydroxypropylmethylcellulose (HPMC), a hydroxypropylcellulose (HPC), a hydroxyethylcellulose (HEC) or other cellulose derivative.

A total weight ratio of the binder in the positive electrode material layer may be, for example, 1.0 wt% to 20 wt% when a total weight of the positive electrode material layer is 100 wt%.

The conductive material is not particularly limited and any known conductive material can be used. For example, the conductive material can be selected from graphite, carbon black, acetylene black (AB), carbon nanotubes (CNT), carbon fiber (CF) (e.g., VGCF), graphene, soot, or mixtures thereof.

The weight percent of the conductive material in the positive electrode material layer may be, for example, 0.1-10.0 wt%.

In some aspects, the cathode active material may be coated with carbon nanotubes (CNT) by a known method prior to being included in the positive electrode material layer. The coating amount may be, for example, about 0.5 wt% to about 5 wt%, when a total weight of the coated cathode active material is considered to be 100 wt%.

Methods of making cathodes are well known. For example, the cathode material can be combined with a binder material and/or a conductive material and applied to a current collector by a known method. For example, granules including the cathode material could be formed and pressed to the current collector by a known method, or a slurry including the cathode material and a solvent could be coated on the current collector and then dried by a known method.

### Anode

The structure of the anode electrode (negative anode) is not particularly limited and known anode active materials can be used, as long as the material can function as the negative electrode active material of the lithium-ion battery. For example, the active material of the anode can include carbon-based negative electrode active materials, such as graphite and coke, alloy-based negative electrode active materials such as Si and/or Sn, SiOx, a lithium metal, a lithium titanate oxide (LTO), titanium niobium oxide (TNO), or a blend thereof. The anode active material can include particles of one these materials coated with a layer of conductive carbon (e.g., graphitic carbon) (e.g., particles of SiOx coated with carbon).

Similar to the cathode, the anode material can include the anode active material and a binder, and the anode material can be applied to a current collector. The anode active material of the present disclosure can account for 50 wt% to 99 wt% of the anode material (or any amount within this range, e.g., 95 wt% to 99 wt%, or 97 wt% to 99 wt%) of the anode material.

### Electrolytic Solution

The electrolytic solution can be a known non-aqueous electrolytic solution, which includes a supporting salt (e.g., a lithium salt) dissolved in a solvent.

The lithium salt is not particularly limited and known lithium salts for use in non-aqueous lithium-ion batteries can be used. In preferred embodiments, the electrolyte salt may include one or more of lithium bis(fluorosulfonyl)imide ("LiFSI"), lithium bis(trifluoromethanesulfonyl)imide ("LiTFSI"), LiBF₄, lithium bis(oxalato)borate ("LiBOB"), LiClO₄, LiAsF₆, LiPF₆, LiCF₃SO₃, LiAlCl₄, lithium 4,5-dicyano-2-(trifluoromethyl)imidazole ("LiTDI"), LiPO₂F₂, and the like.

The amount lithium salt concentration in the electrolytic solution may be, for example, more than 0.8M, more than 1.0M, more than 1.2M, more than 1.4M, more than 1.5M, more than 1.6M, more than 1.7M, more than 1.8M, or more than 2.0M, or the lithium salt concentration may be, for example, less than 4.0M, less than 3.6M, less than 3.2M, less than 2.8M, less than 2.4M, less than 2.0M, less than 1.6M, or less than 1.2M.

The solvent is not particularly limited and known solvents for non-aqueous lithium-ion batteries can be used. The solvent can be a single solvent or a mixture of a plurality solvents. The solvent can be selected from usual organic solvents, notably saturated cyclic carbonates, unsaturated cyclic carbonates, non-cyclic (or linear) carbonates, alkyl esters such as formates, acetates, propionates or butyrates, ethers, lactones such as gamma-butyrolactone, tetrahydrothiophene bioxide, nitrile solvents and mixtures thereof. Among such saturated cyclic carbonates, specific mention may be made, for example, of ethylene carbonate (EC), propylene carbonate (PC), butylene carbonate (BC), and mixtures thereof. Among unsaturated cyclic carbonates, specific mention may be made, for example, of vinylene carbonate (VC), its derivatives and mixtures thereof. Among non-cyclic carbonates, specific mention may be made, for example, of dimethyl carbonate (DMC), diethyl carbonate (DEC), ethyl methyl carbonate (EMC), dipropyl carbonate (DPC) and mixtures thereof. Among the alkyl esters, specific mention may be made, for example, of methyl acetate, ethyl acetate, methyl propionate, ethyl propionate, butyl propionate, methyl butyrate, ethyl butyrate, propyl butyrate and mixtures thereof. Among the ethers, mention may for example be made of dimethyl ether (DME) or diethyl ether (DEE), and mixtures thereof. Known fluorinated solvents can also be used, including, for example, fluorinated benzenes (such as hexafluorobenzene, pentafluorobenzene, 1,2,3,4-tetrafluorobenzene, etc.), fluorine substituted linear carbonates, etc.

The electrolytic solution may include, in addition to the TTSP, a known additive for use in a non-aqueous lithium-ion battery.

One type of additive that may be included in the electrolytic solution is a gas-generation agent used for implementing a pressure-type current interrupt device (CID). Exemplary gas-generation agents include cyclohexylbenzene (CHB), biphenyls, and fluorinated biphenyls having an oxidation potential lower than that of the solvent in the electrolyte solution. When the lithium-ion battery reaches an overcharged state, the compound reacts to generate gas before the electrolyte solution decomposes. When included, the amount of the gas-generation agent may be, for example, 0.01 wt% to 10 wt% (or any amount within this range, such as, for example, 0.1 wt% to 5 wt%; or 1 wt% to 3 wt%).

Specific mention can also be made to the use of known film-forming additives for forming a solid electrolyte interphase (SEI) film on the anode or cathode. For example, one such additive includes fluorinated compound additives, such as fluorinated ethylene carbonate (FEC) and vinylene carbonate (VC). When included, VC (and/or another additive) can be added to the solvent in an amount of 0.1 to 20 wt% based on the total weight of the solvent, or can be added in any amount with this range, such as, for example, 1 to 10 wt%, 2 to 9 wt%, 3 to 8 wt%, 4 to 7 wt%, 5 to 6 wt%, 1 to 5 wt%, 1 to 4 wt%, 1 to 3 wt%, 1 to 2 wt%, 2 to 3 wt%, or 0.1 to 1 wt%.

### Separator

The use of a separator is not particularly limited and known separators for secondary batteries can be used. Separators are placed between both electrodes, and typically show high ionic conductivity (e.g., allow cations (e.g., Li⁺) to pass therethrough), mechanical stability, and thermal stability. Separators are also known which stop the growth of a dendrite.

Conventional categories of separators include microporous membranes, nonwoven membranes, electrospun membranes, membranes with external surface modification, composite membranes, and polymer blends. In one embodiment, the separator is a microporous membrane made of a polyolefin-based material, such as, for example, a microporous membrane made of polyethylene (PE), polypropylene (PP), PP/PE/PP trilayer or the like.

### Battery Module, Pack and System

A battery module according to the present disclosure is a structure containing multiple secondary cells arranged side by side in a common casing; a battery pack is a structure containing a plurality of electrically connected battery modules; and a battery system is a structure containing a plurality of electrically connected cells or battery modules. A battery module or pack may contain one or more control systems (e.g., BMS).

It is well known and understood how to electrically connect secondary cells in series and in parallel. Several techniques are disclosed, for example, in U.S. Publication No. 2019/0123315 (the `315 application) and U.S. Publication No. 2019/0165584 (the `584 application), which are incorporated herein by reference for their disclosure of techniques for assembling a plurality of electrochemical cells and modules. Further, a battery system may comprise additional structure, including a BMS and a cooling system.

### EXAMPLES

In the following, although embodiments of the present disclosure are described in further detail by means of Examples, the present disclosure is not limited thereto.

### Example 1-Capacity Retention

Two 4Ah Control pouch cells were prepared as follows:
Anode: Graphite.
Cathode: About 63.70 wt% LVPF (LiVPO₄F), about 27.30 wt% NMC622, about 5 wt% conductive material, about 4 wt% PVDF binder.
Electrolytic Solution: 1M LiPF6 in EC/DMC/EMC=1/1/1 v/v with 2 wt% VC.

Two 4Ah Example pouch cells were prepared in the same manner as the Control pouch cells, except that 5 wt% TTSP was added to the electrolytic solution.

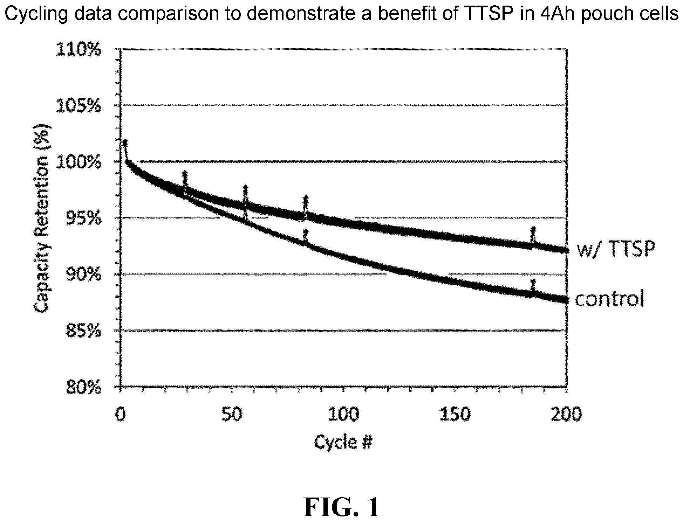

The four prepared cells were then cycled at C/2 rate in 3-4.35V voltage window to determine capacity retention (%). There was a capacity check cycle at C/10 rate every 25 cycles or every 100 cycles after the 100^{th} cycle. The results are shown in FIG. 1.

As seen in FIG. 1, the addition of 5 wt% TTSP demonstrated substantially improved capacity retention.

### Example 2-Rate Capability

A Control coin cell (no TTSP additive) and an Example coin cell (5 wt% TTSP additive) were prepared in the same manner as the pouch cells in Example 1 (that is, the same anode material, cathode material, and electrolytic solution).

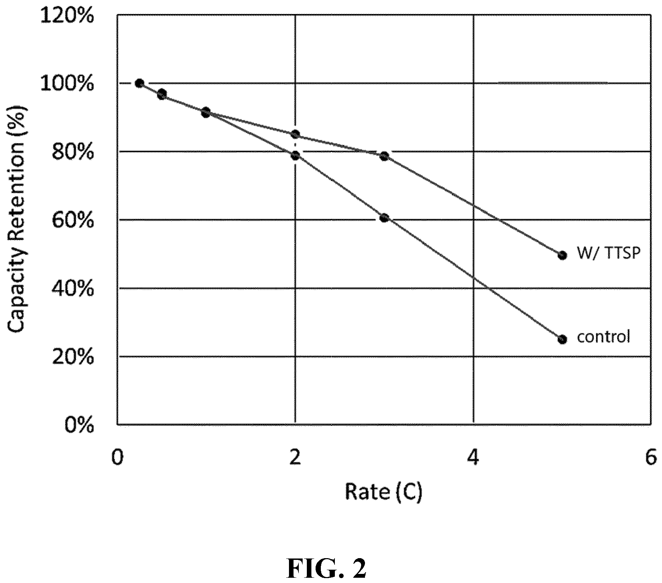

The prepared cells were tested for rate capability (retention (%) at different current (C)-rates). All cells were charged to 100% capacity at C/10 to 4.35V and then discharged at different current (C)-rates to 3V. The results are shown in FIG. 2.

As seen in FIG. 2, the addition of 5 wt% TTSP demonstrated substantially improved capacity retention as the current rate was increased.

### Example 3-Charge Capability

A Control coin cell and an Example coin cell were prepared in the same manner as Example 2.

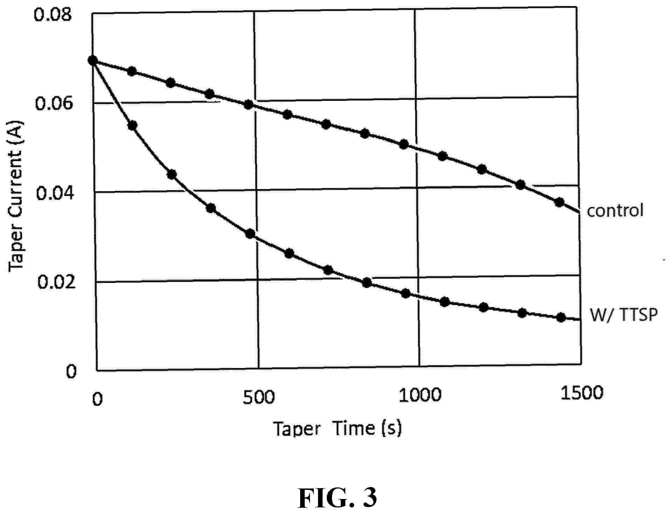

The coin cells were charged at constant current until the upper voltage limit (4.35V) was reached, and the time of the constant voltage step to reach "fully charged" is considered the "Taper time" (more taper time/higher taper current might indicate more side reactions/more residual capacity). The results are shown in FIG. 3.

As shown in FIG. 3, the addition of TTSP showed improved charge capability.

### Example 4-Initial Discharge Capability

A 100 milli Ah (0.1 Ah) single layer Control pouch cell and an Example pouch cell were prepared in the same manner as in Example 1 (anode, cathode, electrolytic solution).

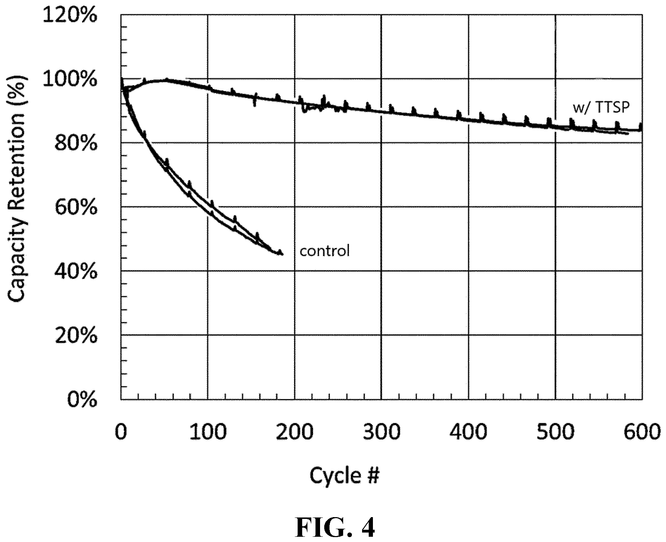

The pouch cells were cycled at C/2 rate in 3-4.35V voltage window to determine how the initial discharge capability changed as the number of cycles increased. There was a capacity check cycle at C/10 rate every 25 cycles. The test was run twice for each type of pouch cell. The results are shown in FIG. 4.

The Control and Example pouch cells had a charge capacity (C1) and a discharge capacity (D1) as noted in Table 1.

**Table 1**

| Electrolyte | C1 (mAh/g) | D1 (mAh/g) | D1/C1 |
|---|---|---|---|
| W/o additive | 174.21 | 151.78 | 87.1% |
| W/ additive | 173.36 | 153.77 | 88.7% |

### Example 5-Vanadium Dissolution

As noted above, a reason for capacity loss when using LVPF as a cathode active material is that vanadium (V) dissolves or otherwise dissociates into the electrolyte, is reduced at the anode, and forms a film/metal on the anode, which may cause problems with the solid electrolyte interphase (SEI).

The same Control and Example pouch cells in Example 1 were cycled for about 60 cycles, the cells were disassembled, and the amount of V, which dissolved from cathode into electrolyte and then plated on the anode was measured by ICP method. For the Example pouch cell, two cells were prepared, and the test was run on each. The results are shown in Table 2. The sample amount used listed in Table 2 is the weight of the anode sample used to prepare the ICP samples.

**Table 2**

| **Cell** | **Vanadium % on Anode** | **Sample Amount Used** |
|---|---|---|
| Example Pouch Cell | 0.189% | 303.67 mg |
| Example Pouch Cell #2 | 0.176% | 310.67 mg |
| Control Pouch Cell | 0.421% | 308.17mg |

The V% on the Anode after cycling was determined by ICP is the weight percentage of plated V in recovered anode sample from the cycled cells.

The disclosure is susceptible to various modifications and alternative means, and specific examples thereof are herein described in detail. It should be understood, however, that the disclosure is not to be limited to the particular examples or methods disclosed, but to the contrary, the disclosure is to cover all modifications, equivalents, and alternatives falling within the spirit and scope of the claims.

## Claims

1. A lithium-ion secondary battery, comprising:
a cathode;
an anode; and
an electrolytic solution, wherein
the cathode comprises a cathode active material including a lithium vanadium fluorophosphate (LVPF) represented by the following Formula (1):
Li₁₊ₓV_{1-y}M_{y}PO₄F_{z} Formula (1),
wherein, in Formula (1), 0≤x≤1; 0≤y≤0.5; 0.8≤z≤1.2; and M is one or more selected from the group consisting of Ti, Al, Mg, Mn, Fe, Co, Y, Cr, Cu, Ni, and Zr,
the electrolytic solution comprising an additive including tris(trimethylsilyl) phosphate (TTSP), and
a content of the TTSP in the electrolytic solution is from greater than 0 wt% to 10 wt% when a total weight of the electrolyte solution is considered to be 100 wt%.

2. The lithium-ion secondary battery according to claim 1, wherein the LVPF represented by the Formula (1) is Li_{1+z}VPO₄F_{z}.

3. The lithium-ion secondary battery according to claim 1, wherein the cathode active material further includes a phosphate cathode active material in a mixture with the LVPF;
a weight ratio of the LVPF to the phosphate cathode active material is r : (1-r), wherein 0<r<1; and
the phosphate cathode active material is represented by Formula (A):
Li₁₊ₓM1ₐX_{b}PO₄ Formula (A),
wherein, in Formula (A), M1 is at least one selected from the group consisting of Fe, Mn, and Co; X is at least one transition metal selected from the group consisting of Ni, V, Y, Mg, Ca, Ba, Al, Sc, and Nd; 0≤x≤0.15; a>0; b≥0; and optionally a+b=1.

4. The lithium-ion secondary battery according to claim 3, wherein the phosphate active material is represented by one of the following Formula (A1) to (A4) or a blend thereof:
Li₁₊ₓFePO₄ Formula (A1),
wherein, in Formula (A1), 0≤x≤0.15,
Li₁₊ₓMnPO₄ Formula (A2),
wherein, in Formula (A2), 0≤x≤0.15,
Li₁₊ₓCoPO₄ Formula (A3),
wherein, in Formula (A3), 0≤x≤0.15,
Li₁₊ₓFe_{y}Mn_{z}X_{b}PO₄ Formula (A4),
wherein, in Formula (A4), X is at least one transition metal selected from the group consisting of Ni, V, Y, Mg, Ca, Ba, Al, Sc, and Nd; 0≤x≤0.15; y>0; z>0; b≥0; and optionally y+z+b=1.

5. The lithium-ion secondary battery according to claim 4, wherein, with regard to the weight ratio (r : (1-r)) of the LVPF to the phosphate cathode active material, 0.1≤r≤0.9.

6. The lithium-ion secondary battery according to claim 1, wherein the cathode active material further includes a phosphate cathode active material in a mixture with the LVPF;
a weight ratio of the LVPF to the phosphate cathode active material is r : (1-r), wherein 0<r<1; and
the phosphate cathode active material is represented by Formula (A5):
Li₃₊ₓV_{2-y}M_{y}(PO₄)₃ Formula (A5),
wherein, in Formula (A5), 0≤x≤1; 0≤y≤0.5; 0.8≤z≤1.2; and M is one or more selected from the group consisting of Ti, Al, Mg, Mn, Fe, Co, Y, Cr, Cu, Ni, and Zr.

7. The lithium-ion secondary battery according to claim 1, wherein the cathode active material further includes a non-phosphate cathode active material in a mixture with the LVPF;
a weight ratio of the LVPF to the non-phosphate cathode active material is s : (1-s), wherein 0<s<1; and
the non-phosphate cathode active material is represented by Formula (B), (C), (D), or a blend thereof:
Li₁₊ₓNiₐM2_{d}M3ₑO₂ Formula (B),
wherein, in Formula (B), M2 is at least one selected from the group consisting of Co, Al, and Mn; M3 is one or more selected from the group consisting of B, Mg, Si, Ca, Ti, V, Cr, Mn, Fe, Cu, Zn, Y, Zr, Nb, W, Mo, Sr, Ce, Ga, and Ta; 0≤x≤0.15; a>0; d>0; e≥0; and optionally a+d+e=1,
Li₁₊ₓMn₂O₄ Formula (C),
wherein, in Formula (C), 0≤x≤0.15,
Li₁₊ₓCoO₂ Formula (D),
wherein, in Formula (D), 0≤x≤0.15.

8. The lithium-ion secondary battery according to claim 7, wherein, with regard to the weight ratio (s : (1-s)) of the LVPF to the non-phosphate cathode active material, 0.1≤s≤0.9.

9. The lithium-ion secondary battery according to claim 7, wherein, with regard to the weight ratio (s : (1-s)) of the LVPF to the non-phosphate cathode active material, 0.5≤s≤0.9.

10. The lithium-ion secondary battery according to claim 7, wherein the non-phosphate cathode active material is represented by one of the following Formula (B 1) to (B4) or a blend thereof:
Li_{w}(NiₓMn_{y}Co_{z}Mₜ)O₂ Formula (B1),
wherein, in Formula (B1), 0.9≤w≤1.1; x>0; y>0; z>0; t≥0; M is one or more selected from the group consisting of Al, B, Mg, Si, Ca, Ti, V, Cr, Fe, Cu, Zn, Y, Zr, Nb, W, Mo, Sr, Ce, Ga, and Ta; and optionally x+y+z+t=1,
Li₁₊ₓNiₐMn_{b}O₂ Formula (B2),
wherein, in Formula (B2), 0≤x≤0.15; a>0; b>0; and optionally a+b=1,
Li_{w}(NiₓCo_{y}Al_{z}Mₜ)O₂ Formula (B3),
wherein, in Formula (B3), 0.9≤w≤1.1; x>0; y>0; z>0; t≥0; M is one or more selected from the group consisting of B, Mg, Si, Ca, Ti, V, Cr, Mn, Fe, Cu, Zn, Y, Zr, Nb, W, Mo, Sr, Ce, Ga, and Ta; and optionally x+y+z+t=1,
Li₁₊ₓNiₐMn_{b}Co_{c}Al_{d}O₂ Formula (B4),
wherein, in Formula (B4), 0≤x≤0.15; a>0; b>0; c>0; d>0; and optionally a+b+c+d=1.

11. The lithium-ion secondary battery according to claim 7, wherein the non-phosphate cathode active material is represented by one of LiNi_{0.33}Mn_{0.33}Co_{0.33}O₂ (NMC 111), LiNi_{0.5}Mn_{0.3}Co_{0.2}O₂ (NMC 532), LiNi_{0.6}Mn_{0.2}Co_{0.2}O₂ (NMC 622), or LiNi_{0.8}Mn_{0.1}Co_{0.1}O₂ (NMC 811).

12. The lithium-ion secondary battery according to claim 3, wherein the cathode active material further includes a non-phosphate cathode active material in a mixture with phosphate cathode active material and the LVPF;
a weight ratio of the LVPF to the non-phosphate cathode active material is s : (1-s), wherein 0<s<1; and
the non-phosphate cathode active material is represented by Formula (B), (C), (D), or a blend thereof:
Li₁₊ₓNiₐM2_{d}M3ₑO₂ Formula (B),
wherein, in Formula (B), M2 is at least one selected from the group consisting of Co, Al, and Mn; M3 is one or more selected from the group consisting of B, Mg, Si, Ca, Ti, V, Cr, Mn, Fe, Cu, Zn, Y, Zr, Nb, W, Mo, Sr, Ce, Ga, and Ta; 0≤x≤0.15; a>0; d>0; e≥0; and optionally a+d+e=1,
Li₁₊ₓMn₂O₄ Formula (C),
wherein, in Formula (C), 0≤x≤0.15,
Li₁₊ₓCoO₂ Formula (D),
wherein, in Formula (D), 0≤x≤0.15.

13. The lithium-ion secondary battery according to claim 12, wherein, with regard to the weight ratio (s : (1-s)) of the phosphate cathode active material to the non-phosphate cathode active material, 0.1≤s≤0.9.

14. The lithium-ion secondary battery according to claim 12, wherein the non-phosphate cathode active material is represented by one of the following Formula (B1) to (B4) or a blend thereof:
Li_{w}(NiₓMn_{y}Co_{z}Mₜ)O₂ Formula (B1),
wherein, in Formula (B1), 0.9≤w≤1.1; x>0; y>0; z>0; t≥0; M is one or more selected from the group consisting of Al, B, Mg, Si, Ca, Ti, V, Cr, Fe, Cu, Zn, Y, Zr, Nb, W, Mo, Sr, Ce, Ga, and Ta; and optionally x+y+z+t=1,
Li₁₊ₓNiₐMn_{b}O₂ Formula (B2),
wherein, in Formula (B2), 0≤x≤0.15; a>0; b>0; and optionally a+b=1,
Li_{w}(NiₓCo_{y}Al_{z}Mₜ)O₂ Formula (B3),
wherein, in Formula (B3), 0.9≤w≤1.1; x>0; y>0; z>0; t≥0; M is one or more selected from the group consisting of B, Mg, Si, Ca, Ti, V, Cr, Mn, Fe, Cu, Zn, Y, Zr, Nb, W, Mo, Sr, Ce, Ga, and Ta; and optionally x+y+z+t=1,
Li₁₊ₓNiₐMn_{b}Co_{c}Al_{d}O₂ Formula (B4),
wherein, in Formula (B4), 0≤x≤0.15; a>0; b>0; c>0; d>0; and optionally a+b+c+d=1.

15. The lithium-ion secondary battery according to claim 12, wherein the non-phosphate cathode active material is represented by one of LiNi_{0.33}Mn_{0.33}Co_{0.33}O₂ (NMC 111), LiNi_{0.5}Mn_{0.3}Co_{0.2}O₂ (NMC 532), LiNi_{0.6}Mn_{0.2}Co_{0.2}O₂ (NMC 622), or LiNi_{0.8}Mn_{0.1}Co_{0.1}O₂ (NMC 811).

16. The lithium-ion secondary battery according to claim 14, wherein a weight ratio of the phosphate cathode active material to the non-phosphate cathode active material is t : (1-t), wherein 0.1≤t≤0.9.

17. The lithium-ion secondary battery according to claim 1, wherein the additive further includes fluorinated ethylene carbonate (FEC) and/or vinylene carbonate (VC) in a total amount of 1 wt% to 15 wt% when a total weight of the electrolyte solution is considered to be 100 wt%, and a total amount of the TTSP, the FEC, and the VC is 2 wt% to 20 wt%.

18. The lithium-ion secondary battery according to claim 1, wherein the cathode further comprises one or more conductive materials and a binder material.

19. The lithium-ion secondary battery according to claim 1, wherein the anode comprises an anode active material including graphite.

20. A method of making a lithium-ion secondary battery with reduced cycle capacity loss, the battery comprising a cathode, anode, and electrolytic solution, the method comprising:
selecting a phosphate-based cathode active material including at least lithium vanadium fluorophosphate (LVPF) represented by the following Formula (1):
Li₁₊ₓV_{1-y}M_{y}PO₄F_{z} Formula (1),
wherein, in Formula (1), 0≤x≤1; 0≤y≤0.5; 0.8≤z≤1.2; and M is one or more selected from the group consisting of Ti, Al, Mg, Mn, Fe, Co, Y, Cr, Cu, Ni, and Zr; and
adding an effective amount of tris(trimethylsilyl) phosphate (TTSP) to the electrolytic solution to reduce cycle capacity loss.
